(19) Europäisches Patentamt
European Patent Office
Office européen des brevets

(11) EP 3 213 980 A1

(12) EUROPEAN PATENT APPLICATION
published in accordance with Art. 153(4) EPC

(43) Date of publication:
06.09.2017 Bulletin 2017/36

(51) Int Cl.:
*B62D 12/02* (2006.01)

(21) Application number: 14904676.5

(22) Date of filing: 30.10.2014

(86) International application number:
PCT/CN2014/089912

(87) International publication number:
WO 2016/065575 (06.05.2016 Gazette 2016/18)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 27.10.2014 CN 201410584223

(71) Applicant: Jointech (Suzhou) Vehicle System Co., Ltd.
Suzhou, Jiangsu 215211 (CN)

(72) Inventors:
• HAO, Qingjun
Suzhou
Jiangsu 215211 (CN)
• TAN, Xiaoliang
Suzhou
Jiangsu 215211 (CN)

• SU, Xianjin
Suzhou
Jiangsu 215211 (CN)
• WEI, Weishang
Suzhou
Jiangsu 215211 (CN)
• ZHU, Xiaoxiao
Suzhou
Jiangsu 215211 (CN)
• LU, Xiaoling
Suzhou
Jiangsu 215211 (CN)
• NIU, Zhen
Suzhou
Jiangsu 215211 (CN)

(74) Representative: London IP Ltd
Lymington Business Centre
Solent House
Cannon Street
Lymington, Hampshire SO41 9BR (GB)

(54) **HYDRAULIC BUFFERING SYSTEM FOR IMPLEMENTING BALANCED FORCE OUTPUT**

(57) The invention relates to a hydraulic buffering system which achieves balanced output of the pressure. It consists of a unidirectional fixed ratio pressure relief valve, a piston assembly a the cylinder assembly; the unidirectional fixed ratio pressure relief valve includes a valve core, a first chamber, a second chamber and a third chamber; the valve core is provided inside the second chamber stated; the first end of the valve core is connected with the first chamber; the second end of the valve core is connected with the third chamber; the second chamber is provided with a shunt channel, and a feedback oil hole is provided between the shunt channel and the third chamber; the unidirectional fixed ratio pressure relief valve is provided inside the piston; and the first chamber is connected with the rod cavity, the shunt channel of the second chamber is connected with the rodless cavity. Adopting the hydraulic buffering system achieving balanced output of the pressure stated in the invention, under the condition of not changing the structure of the original hydraulic buffer, the equal output pressure of the hydraulic buffer can be achieved by providing the unidirectional fixed ratio pressure relief valve inside the piston, the mechanical performance is stable with a simple structure, which is easy for implementation, maintenance and replacement.

Figure 2

EP 3 213 980 A1

## Description

## Technical field

This invention relates to the technical field of the articulated bus, and specifically refers to a hydraulic buffering system which achieves balanced output of force.

## Background art

A pressure control oil circuit and its corresponding buffer that achieve a stepped damping control. Generally an articulated vehicle consists of two carriages; a front carriage and a rear carriage are connected by an articulated system of the chassis, the articulated system of the chassis includes a front frame, a rear frame, a turntable bearing, and a hydraulic buffer which provides the damping; the front frame is fixedly connected with the front carriage through a front cross beam, the rear frame is fixedly connected with the rear carriage through a rear cross beam, and each of the two hydraulic buffers which is separately located on the left side and the right side is connected between the front frame and the rear frame of the articulated system. When the front carriage makes a turn, the front frame and the rear frame of the articulated system will be driven by the front carriage and the rear carriage to make a relative rotation, and the hydraulic buffer includes a hydraulic control oil circuit, a cylinder assembly, a piston assembly and an oil storage tank, wherein the cylinder assembly, the hydraulic control oil circuit and the oil storage tank are fixedly connected firstly and then connected with the rear frame of the articulated system; the piston assembly, which is set in the cylinder assembly and can slide inside the cylinder assembly, is connected with the front frame of the articulated system.

Assuming the front carriage is turning right, the hydraulic damping actually used is the same for both the left and the right hydraulic buffer; for the left hydraulic buffer, the rod cavity is the working chamber of the buffer pressure, and for the right hydraulic buffer, the rodless cavity is the working chamber of the buffer pressure. The presence of the piston rod makes the unequal oil emission volume and the unequal effective cross-section area for the rod cavity and the rodless cavity, while the damping pressure generated by hydraulic damping is in a direct ratio with the liquid flow volume that goes through, concluding that the output pressure of the left hydraulic buffer is larger than that of the right hydraulic buffer, and further concluding that the unbalanced output pressure makes the unbalanced pressure received by the left side and the right side of the articulated system, thus the mechanical stability is getting worse.

## Contents of the Invention

The invention intends to solve the above weaknesses of the existing technology, so as to provide a hydraulic buffering system which avoids the uneven pressure received and achieves the balanced output pressure, by providing onside the piston an unidirectional fixed ratio pressure relief valve, then to reduce the damping pressure of the working rodless cavity as buffering pressure working chamber by a certain ratio decided by the pressure feedback and the area ratio of the spool area of the unidirectional fixed ratio pressure relief valve, finally to realize the equal output pressure of the left and right hydraulic buffer.

In order to achieve the above intention, the hydraulic buffering system of the invention which achieves the balanced output pressure comprising the followings:

The hydraulic buffering system stated, which achieves balanced output of the pressure, is provided with an unidirectional fixed ratio pressure relief valve, the piston assembly and the cylinder assembly. The piston assembly includes a piston and a piston rod, the cylinder assembly includes a welded triple assembly and a cylinder, the piston assembly is provided inside the cylinder and separates the corresponding cylinder into rod cavity and rodless cavity, featuring that:

  the unidirectional fixed ratio pressure relief valve stated includes a valve core, the valve core divides the unidirectional fixed ratio pressure relief valve into a first chamber, a second chamber, and a third chamber; the valve core is provided inside the second chamber, a first end of the valve core is connected with the first chamber, the second end of the valve core is connected with the third chamber, the second chamber is provided with a shunt channel, and a feedback oil hole is provided between the shunt channel and the third chamber;

  the unidirectional fixed ratio pressure relief valve is provided inside the piston, and the first chamber is connected with the rod cavity, the shunt channel of the second chamber is connected with the rodless cavity.

Furthermore, the unidirectional fixed ratio pressure relief valve further includes a spring, the spring is provided onside the valve core.

Furthermore, a damping hole is provided inside the shunt channel.

Furthermore, when the rod cavity acts as the working chamber of the pressure, the valve core of the unidirectional fixed ratio pressure relief valve is closed; when the rodless cavity acts as the working chamber of the pressure, the valve core of the unidirectional fixed ratio pressure relief valve is opened, and the unidirectional fixed ratio pressure relief valve shunts the hydraulic oil in rodless cavity to the rod cavity through the shunt channel according to the force balance formula.

Furthermore, the force balance formula is:

$$P2＝A1·P1/A2;$$

Wherein P1 is the pressure generated by the rodless cavity, P2 is the pressure generated by the rod cavity, A1 is the effective cross-section area of the rodless cavity, and A2 is the effective cross-section area of the rod cavity.

Furthermore, the outer tube of the welded triple assembly is a circular outer tube.

In respect of the hydraulic buffering system which achieves balanced output of the pressure in the invention, when the rodless cavity is the working chamber of the buffer pressure, the valve core of the unidirectional fixed ratio pressure relief valve could be opened just with a little pressure generated, hydraulic oil of the rodless cavity will flow directly to the rod cavity by a certain ratio through a pressure reducing valve with a certain ratio, to realize that the liquid flow volume of the hydraulic oil which flows from the rodless cavity to the rod cavity is less than that flows from the rod cavity to the rodless cavity, and to realize the equal pressure received by the left side and the right side of the articulated system, and the above result can be achieved by providing the unidirectional fixed ratio pressure relief valve inside the piston, without changing the structure of the original hydraulic buffer. The mechanical performance is stable with a simple structure, which is easy for implementation, maintenance and replacement. Meanwhile, the hydraulic buffering system of the present invention uses circular outer tube, therefore uses less hydraulic oil compared to the square outer tube of the prior art, the weight of the hydraulic buffer is lighter, and its cost is lower, therefore, the present invention has wider range of application.

## Description of Drawings

Figure 1 shows a structure diagram of the hydraulic buffering system which achieves the balanced output of the pressure for the invention.
Figure 2 shows a structure diagram of the hydraulic control oil circuit of the hydraulic buffering system which achieves the balanced output of the pressure for the invention.
Figure 3 shows a structure diagram of the cylinder assembly of the hydraulic buffering system which achieves the balanced output of the pressure for the invention.
Figure 4 shows a structure diagram of the outer tube of the existing welded triple assembly.
Figure 5 shows a structure diagram of the outer tube of the welded triple assembly of the hydraulic buffering system which achieves the balanced output of the pressure for the invention.
Figure 6 shows a complete structure diagram of the hydraulic buffering system which achieves the balanced output of the pressure for the invention.
Figure 7 shows a structure diagram of the unidirectional fixed ratio pressure relief valve of the hydraulic buffering system which achieves the balanced output of the pressure for the invention.

| 1 | Front frame |
|---|---|
| 2 | Rear frame |
| 3 | Cylinder assembly |
| 31 | Cylinder |
| 32 | Rear end cover |
| 33 | Pressing pipe |
| 34 | Manifold block |
| 35 | outer tube |
| 36 | Flat point set screw |
| 4 | Piston assembly |
| 41 | Piston |
| 42 | Piston rod |
| 43 | Rod cavity |
| 43a | Rod cavity of the left hydraulic buffer |
| 43b | Rod cavity of the right hydraulic buffer |
| 44 | Rodless cavity |
| 44a | Rodless cavity of the left hydraulic buffer |
| 44b | Rodless cavity of the right hydraulic buffer |
| 5 | Oil storage tank |
| 5a | Oil storage tank of the left hydraulic buffer |
| 5b | Oil storage tank of the right hydraulic buffer |
| 61 | The first unidirectional valve |
| 61 a | The first unidirectional valve of the left hydraulic buffer |
| 61 b | The first unidirectional valve of the right hydraulic buffer |
| 62 | The second unidirectional valve |
| 62a | The second unidirectional valve of the left hydraulic buffer |
| 62b | The second unidirectional valve of the right hydraulic buffer |
| 63 | The third unidirectional valve |
| 63a | The third unidirectional valve of the left hydraulic buffer |
| 63b | The third unidirectional valve of the right hydraulic buffer |
| 64 | The fourth unidirectional valve |
| 64a | The fourth unidirectional valve of the left hydraulic buffer |
| 64b | The fourth unidirectional valve of the right hydraulic buffer |
| 71 | The first overflow valve |
| 71a | The first overflow valve of the left hydraulic buffer |
| 71b | The first overflow valve of the right hydraulic buffer |
| 72 | The second overflow valve |
| 72a | The second overflow valve of the left hydraulic buffer |
| 72b | The second overflow valve of the right hydraulic buffer |
| 73 | The solenoid valve |

| 73a | The solenoid valve of the left hydraulic buffer |
| 73b | The solenoid valve of the right hydraulic buffer |
| 74 | Hydraulic damping |
| 74a | Hydraulic damping of the left hydraulic buffer |
| 74b | Hydraulic damping of the right hydraulic buffer |
| 75 | Mechanical valve |
| 75a | Mechanical valve of the left hydraulic buffer |
| 75b | Mechanical valve of the right hydraulic buffer |
| 8 | The left hydraulic buffer |
| 9 | The right hydraulic buffer |
| 10 | The unidirectional fixed ratio pressure relief valve |
| 10a | The unidirectional fixed ratio pressure relief valve of the left hydraulic buffer |
| 10b | The unidirectional fixed ratio pressure relief valve of the eight hydraulic buffer |
| 101 | Valve core |
| 102 | The first chamber |
| 103 | The second chamber |
| 104 | The third chamber |
| 105 | Oil hole of the feedback |
| 106 | Shunt channel |
| 107 | Damping hole |
| 108 | Spring |
| 11 | The oil absorption port |

**Detailed Description of Embodiments**

Now, a further instruction will be given below to this invention with a preferred embodiment of this invention to describe it more clearly.

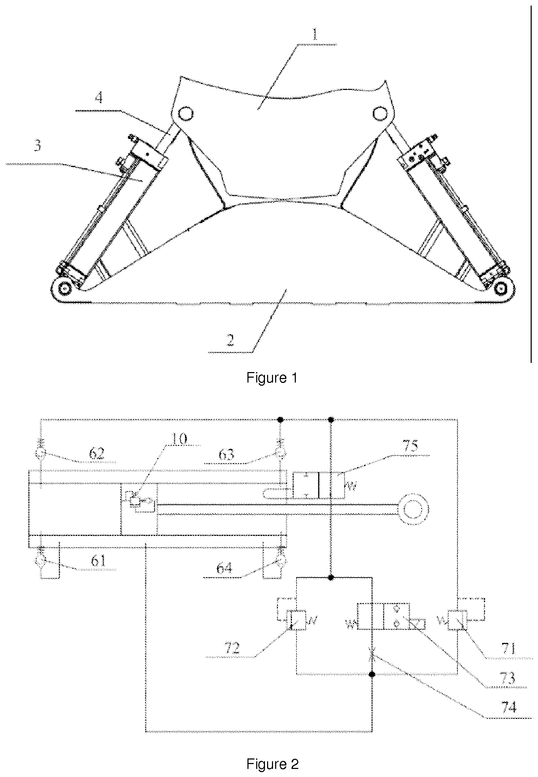

In one embodiment of this invention, as shown by Figure 1, both the right and left part between the front frame 1 and the rear frame 2 of the articulated system are connected with one hydraulic buffer, each hydraulic buffer includes a hydraulic control oil circuit, a cylinder assembly 3, a piston assembly 4 and an oil storage tank 5, wherein the hydraulic control oil circuit, the cylinder assembly 3, and the oil storage tank 5 are fixedly connected firstly and then connected with the rear frame 2 of the articulated system; the piston assembly 4, which is provided inside the cylinder assembly 3 and can slide inside the cylinder assembly 3, is connected with the front frame 1 of the articulated system.

Figure 2 shows an structure diagram of the hydraulic control oil circuit. The hydraulic control oil circuit consists of a first unidirectional valve 61, a second unidirectional valve 62, a third unidirectional valve 63, a fourth unidirectional valve 64, a mechanical valve 75, a solenoid valve 73, a first overflow valve 71, a second overflow valve 72 and a hydraulic damping 74.

Wherein, the first unidirectional valve 61 is arranged between the oil storage tank 5 and the rodless cavity 44 of the cylinder 31, serving as a first oil absorption circuit; the fourth unidirectional valve 64 is arranged between the rod cavity 43 of the cylinder 31 and the oil storage tank 5, serving as a second oil absorption circuit; The pressure control oil circuit is composed of the mechanical valve 75, the solenoid valve 73, the first overflow valve 71, the second overflow valve 72 and the hydraulic damping 74, and all elements of the pressure control oil circuit are provided inside the manifold block of the welded triple assembly; The second unidirectional valves 62 is arranged between the rodless cavity 44 of the cylinder 31 and the pressure control oil circuit, serving as a first oil pressing circuit; the third unidirectional valves 63 is arranged between the rod cavity 43 of the cylinder 31 and the pressure control oil circuit, serving as a second oil pressing circuit; and the oil circuit between the pressure control oil circuit and the oil storage tank 5 is the oil return circuit.

Meanwhile, the unidirectional fixed ratio pressure relief valve 10 is arranged on the piston 11, and connected with the rod cavity 43 and the rodless cavity 44 to form the pressure reducing circuit with a certain ratio, serving as the oil distribution circuit of the hydraulic buffer.

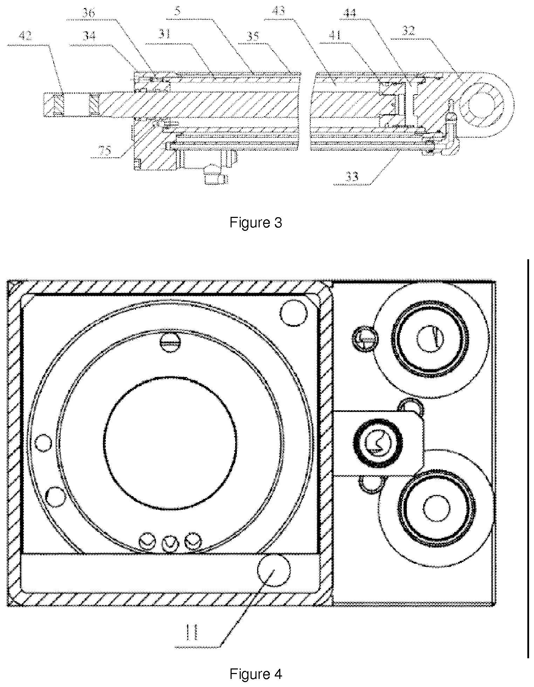

Figure 3 shows a structure diagram of the cylinder assembly. The cylinder assembly 3 comprises a welded triple assembly, a cylinder 31, a rear end cover 32, a pressing pipe 33 and related cylinder sealing elements.

Wherein, the welded triple assembly is welded in sequence with the manifold block 34, the outer tube 35 and a flange, all elements of the pressure control oil circuit integrates in the manifold block 34; the cylinder 31 is arranged inside the welded triple assembly, and is in contact with the manifold block 34 of the welded triple assembly to form one end sealing part through the cylinder sealing elements; the rear end cover 32 is arranged at the other end of the cylinder 31 and the welded triple assembly, and seal the cylinder 31 and the other end of the welded triple assembly through cylinder sealing elements; on the manifold block 34 of the welded triple assembly, a flat point set screw 36 is provided, to press tightly the cylinder 31 in the welded triple assembly in order to avoid the axial movement of the cylinder 31 between the manifold block 34 and the rear end cover 32; the pressing pipe 33 is provided between the rear end cover 32 and the manifold block 34 of the welded triple assembly, which achieves the connection of the first oil pressing circuit and the pressure controlled oil circuit of the manifold block 34; The cylinder 31 and the ring seal area inside the outer tube of the welded triple assembly form the oil storage tank 5.

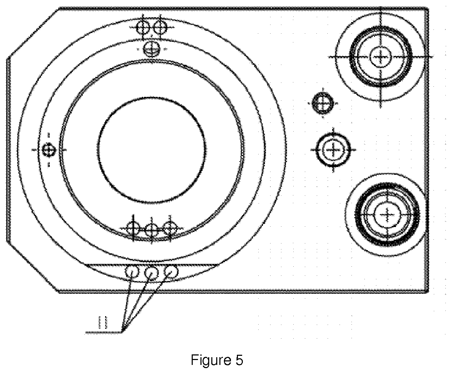

At any time during the running period of the hydraulic buffer, the oil suction port 11 of the hydraulic buffer shall always be under the liquid level of the hydraulic oil, otherwise there will be "suction port" phenomenon when the hydraulic buffer is in the process of the oil absorption, which causes the unstable damping pressure, and also the "empty absorption" phenomenon will cause severe corrosion of the hydraulic buffer. In the current art, the outer tube 35 of the welded triple assembly is of the square outer tube (shown in Figure 4) to ensure the oil suction port 11 is under the liquid level when under the same function of the hydraulic buffer, the hydraulic oil needed to be filled in should be several times of the circular outer tube. Thus, the outer tube 35 of the welded triple assembly of the invention uses the circular outer tube (as shown in Figure 5), which is less fueled with the hydraulic oil than current technology, and the weight of the hydraulic buffer is lighter and the cost is lower, so it has a great practical significance for vehicles now days that pursues a lighter weight and a more economy fuel.

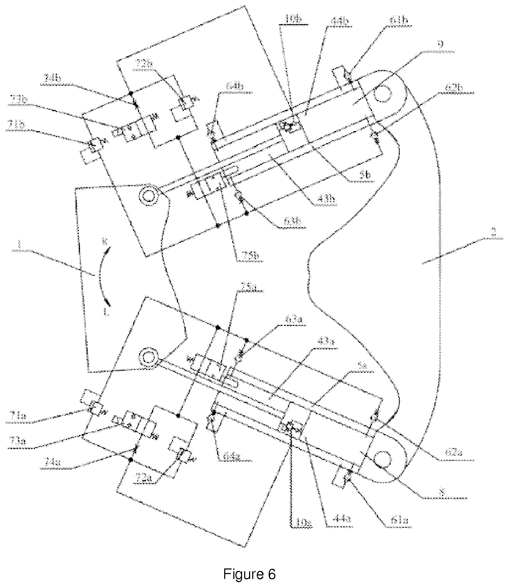

Figure 6 shows a complete structure diagram of the invention, a further instruction will be given below with a specific embodiment of the invention.

When the vehicle is turning right, the front vehicle frame and the rear vehicle frame will drive the front frame 1 and the rear frame 2 to rotate relatively, the piston assembly of the left hydraulic buffer 8 rotates together with the front frame 1, and slide out to the rod cavity in the cylinder; the piston assembly of the right hydraulic buffer 9 rotates together with the front frame 1, and slide in to the rodless cavity in the cylinder;

For the left hydraulic buffer 8, the volume of the rod cavity 43a is shrank down, to compress the hydraulic oil inside the rod cavity 43a to go through the second oil pressing circuit to the pressure control oil circuit for pressure control, and generates a pressure value, and then go back to the oil storage tank 5a through the oil return circuit; the pressure generated by the rod cavity 43a affect on the piston to ease the movement trend of the piston slide to the rod cavity 43a, that is to say, to ease the movement trend of turning right of the articulated system, thereafter, to ease the movement trend of turning right of the vehicle; When the piston slides to the rod cavity 43a in the cylinder, the volume of the rodless cavity 44a increases, there is a negative pressure generated, and the oil is absorbed from the oil storage tank 5a through the first oil absorption circuit, keeping the hydraulic oil fully filled in the cavity, at this time, the output pressure of the left hydraulic buffer $F2=P2·A2$ (P2 is the damping pressure of the rod cavity, A2 is the effective cross-section area of the rod cavity).

For the right hydraulic buffer 9, the volume of the rodless cavity 44b is shrank down, to compress hydraulic oil inside the rodless cavity 44b to go through the first oil pressing circuit to the pressure control oil circuit for pressure control, and there is a pressure value generated, then it goes back to the oil storage tank 5b through the oil return circuit; the pressure generated by the rodless cavity 44b affect on the piston to ease the movement trend of the piston to the rodless cavity 44b, that is to say, to ease the movement trend of turning right of the articulated system, then, it eases the movement trend of turning right of the vehicle; When the piston slides to the rodless cavity 44b in the cylinder, the volume of the rod cavity 43b increases, there is a negative pressure generated, and then absorbs the oil from the oil storage tank 5b through the second oil absorption circuit, keeping the hydraulic oil fully filled in the chamber. The output pressure of the right hydraulic buffer $F1=P1·A1$ (P1 is the damping pressure of the rodless cavity; A1 is the effective cross-section area of the rodless cavity).

Due to P1>P2, A1>A2, it is obviously that F1>F2, which results in unbalanced pressure received by the left side and the right side of the articulated system, thus the mechanical stability is worse.

This invention solves the problem of unbalanced pressure received by the left side and the right side of the articulated system by providing an unidirectional fixed ratio pressure relief valve 10a and 10b on the piston. Specific Embodiments are as follow:

When the vehicle is turning right, the rod cavity 43a of the left hydraulic buffer 8 acts as the working chamber, the valve core of the unidirectional fixed ratio pressure relief valve 10a is cut off, all the hydraulic oil of the rod cavity 43a go through the pressure control oil circuit to make pressure control; When the rodless cavity 44b of the right hydraulic buffer 9 acts as the working chamber, the valve core of the unidirectional fixed ratio pressure relief valve 10b is driven to open by hydraulic oil, the unidirectional fixed ratio pressure relief valve 10b reduce the damping pressure of the rodless cavity 44b of the right hydraulic buffer 9 at a certain ration, by depending on the ratio of the oil hole of the feedback and the valve core, which means to make the hydraulic oil of the rodless cavity 44b go through the unidirectional fixed ratio pressure relief valve 10b to shunt at a certain ratio, directly back to rod cavity 43b of the right hydraulic buffer 43b, by calculating the ratio, to make the liquid flow volume of the rodless cavity 44b of the right hydraulic buffer 9 controlled through the hydraulic control oil circuit less than that of the rod cavity 43a of the left hydraulic buffer 8 controlled through the hydraulic control oil circuit, that's to say, to make P1 less than P2 by a certain ratio, finally making $P2·A2 = P1·A1$, and achieving the balanced pressure received by the left side and the right side of the articulated system.

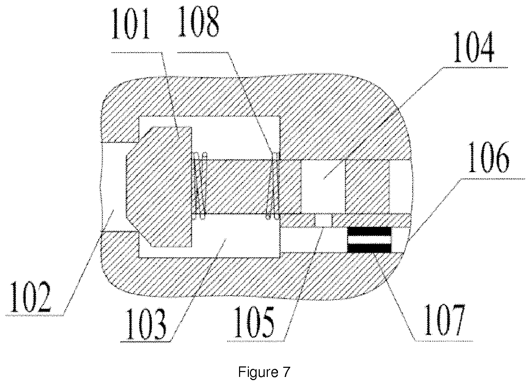

Figure 7 shows a structure diagram of the unidirectional fixed ratio pressure relief valve.

The unidirectional fixed ratio pressure relief valve 10 includes a valve core 101; the valve core 101 divides the unidirectional fixed ratio pressure relief valve 10 into a first chamber 102, a second chamber 103, and a third chamber 104; the valve core 101 is located in the second chamber 103; the first end of the valve core 101 is connected with the first chamber 102, the second port of the valve core 101 is connected with the third chamber 104 stated, the second chamber 103 is provided with a shunt channel 106, and a feedback oil hole 105 is provided between the shunt channel 106 and the third chamber 104, a damping hole 107 is provided inside the shunt channel 106 .

Furthermore, the unidirectional fixed ratio pressure relief valve 10 includes a spring 108, the spring 108 is provided onside the valve core 101.

A further instruction will be given below to this invention with an embodiment of this invention:

When the hydraulic oil flows from the rod cavity to the rodless cavity, the valve core 101 is cut off;

When the hydraulic oil flows from the rodless cavity to the rod cavity, setting the pressure of the first chamber and the third chamber are the same P1, the pressure of the second chamber is the P2.

the pressure P1 of the rodless cavity 44 affect on the effective cross-section A1, and the pressure F1 generated on the rodless cavity 44 side is P1·A1, a pressure F2 is made by the spring on side of the rod cavity 43 . When there is no pressure of the rodless cavity 44, the pressure F2 of the spring 108 drives the valve core 101 to close, when the rodless cavity 44 generates the pressure P1, and when F1>F2, the valve spring 101 open, the pressure P2 is generated by the rod cavity 43 side, and the effective cross-section of P2 is A2, and the pressure F3=P2·A2. During design process, make the pressure F2 of the spring 108 very much smaller when comparing with other pressures, which can be neglected, then as long as the pressure F1 generated by the rodless cavity 44 is small enough, the valve core 101 can be opened; when the valve core 101 is on a balanced pressure received, then F1=F3, that is to say, P1·A1=P2·A2, which can be drawn, P2=A1·P1/A2, concluding that by changing the value of A1 and A2, the relation between P1 and P2 can be changed, to reduce some pressure of the rodless cavity 44, that is to overflow part of the hydraulic oil, so as to reduce the pressure value of the rodless cavity with the purpose of making the same output pressure of the right cylinder and the left cylinder.

In respect of the hydraulic buffering system which achieves balanced output of the pressure stated in the invention, when the rodless cavity acts as the working chamber of the buffer pressure, the valve core of the unidirectional fixed ratio pressure relief valve could be opened just with a little generated pressure, then hydraulic oil of the rodless cavity flows directly to the rod cavity to shunt by a certain ratio through a pressure reducing valve with a certain ratio, to make the liquid flow volume of the hydraulic oil which flows from the rodless cavity to the rod cavity less than that flows from the rod cavity to the rodless cavity, and to realize the equal pressure received by the left side and the right side of the articulated system, and the above result can be achieved by providing the unidirectional fixed ratio pressure relief valve inside the piston, without changing the structure of the original hydraulic buffer. The mechanical performance is stable with a simple structure, which is easy for implementation, maintenance and replacement. Meanwhile, the hydraulic buffering system of the present invention uses circular outer tube, therefore uses less hydraulic oil compared to the square outer tube of the prior art, the weight of the hydraulic buffer is lighter, and its cost is lower, therefore, the present invention has wider range of application.

In this specification, descriptions are made by referring to the specific embodiments of the invention. However, various modifications and transformations can still be made, without going against the spirit and scope of the invention. Therefore, this specification and the figures thereof can be considered as illustrative, rather than restrictive.

## Claims

1. A hydraulic buffering system which achieves balanced output of the pressure, the hydraulic buffering system is provided with an unidirectional fixed ratio pressure relief valve, a piston assembly and a cylinder assembly, wherein the piston assembly includes a piston and a piston rod, and the cylinder assembly includes a welded triple assembly and a cylinder, and the piston assembly is provided inside the cylinder and separates the corresponding cylinder into a rod cavity and a rodless cavity, featuring that:

   the unidirectional fixed ratio pressure relief valve includes a valve core, and the valve core divides the unidirectional fixed ratio pressure relief valve into a first chamber, a second chamber, and a third chamber; the valve core is located inside the second chamber; the first end of the valve core is connected with the first chamber, and the second port of the valve core is connected with the third chamber; the second chamber is provided with a shunt channel, and a feedback oil hole is provided between the shunt channel and the third chamber;
   the unidirectional fixed ratio pressure relief valve is provided inside the piston, and the first chamber is connected with the rod cavity, the shunt channel of the second chamber is connected with the rod cavity.

2. The hydraulic buffering system of claim 1, wherein the unidirectional fixed ratio pressure relief valve fruther includes a spring, wherein the spring is provided onside the valve core.

3. The hydraulic buffering system of claim 1, wherein a damping hole is provided inside the shunt channel.

4. The hydraulic buffering system of any one of claims 1- 3, when the rod cavity is the working chamber of the buffer pressure, the valve core of the unidirectional fixed ratio pressure relief valve stated is closed; when the rodless cavity is the working chamber of the buffer pressure, the valve core of the unidirectional fixed ratio pressure relief valve stated is opened, and the unidirectional fixed ratio pressure relief valve shunt the hydraulic oil in rodless cavity to the rod cavity stated through the shunt channel according to a force balance formula.

5. The hydraulic buffering system of claim 4, wherein the force balance formula is:

$$P2 = A1 \cdot P1/A2;$$

wherein P1 is the pressure generated by the rodless cavity, and P2 is the pressure generated by the rod cavity; A1 is the effective cross-section area of the rodless cavity, and A2 is the effective cross-section area of the rod cavity.

6. The hydraulic buffering system of claim 1, wherein a outer tube of the welded triple assembly is a circular outer tube.

Figure 1

Figure 2

Figure 3

Figure 4

Figure 5

Figure 6

101  108                    104

                                    106

102

103        105              107

Figure 7

# INTERNATIONAL SEARCH REPORT

| International application No. |
|---|
| **PCT/CN2014/089912** |

## A. CLASSIFICATION OF SUBJECT MATTER

B62D 12/02 (2006.01) i

According to International Patent Classification (IPC) or to both national classification and IPC

## B. FIELDS SEARCHED

Minimum documentation searched (classification system followed by classification symbols)

B62D 12; B60D 1; B60D 5

Documentation searched other than minimum documentation to the extent that such documents are included in the fields searched

Electronic data base consulted during the international search (name of data base and, where practicable, search terms used)

VEN, CPRS, CNKI: articulate, vehicle, buffer, valve, articulated vehicle, proportion

## C. DOCUMENTS CONSIDERED TO BE RELEVANT

| Category* | Citation of document, with indication, where appropriate, of the relevant passages | Relevant to claim No. |
|---|---|---|
| A | CN 102152719 A (JOINTECH (SUZHOU) VEHICLE SYSTEM CO., LTD.), 17 August 2011 (17.08.2011), description, pages 3-5, and figures 1-8 | 1-6 |
| A | CN 103213465 A (JOINTECH (SUZHOU) VEHICLE SYSTEM CO., LTD.), 24 July 2013 (24.07.2013), the whole document | 1-6 |
| A | CN 2923463 Y (JIANGXI GAITE TRAINING GEAR CO.), 18 July 2007 (18.07.2007), the whole document | 1-6 |
| A | FR 2298557 A1 (SUMITOMO CHEMICAL CO.), 24 September 1976 (24.09.1976), the whole document | 1-6 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 November 2014 (26.11.2014) | **16 December 2014 (16.12.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Wenmei** Telephone No.: (86-10) **62085523** |
|---|---|

Form PCT/ISA/210 (second sheet) (July 2009)

## INTERNATIONAL SEARCH REPORT
### Information on patent family members

| | International application No. |
| --- | --- |
| | **PCT/CN2014/089912** |

| Patent Documents referred in the Report | Publication Date | Patent Family | Publication Date |
| --- | --- | --- | --- |
| CN 102152719 A | 17 August 2011 | None | |
| CN 103213465 A | 24 July 2013 | None | |
| CN 2923463 Y | 18 July 2007 | None | |
| FR 2298557 A1 | 24 September 1976 | US 4221686 A | 09 September 1980 |
| | | GB 1494061 A | 07 December 1977 |
| | | DE 2601408 A1 | 29 July 1976 |
| | | BE 837757 A1 | 14 May 1976 |
| | | JP S5422124 B2 | 04 August 1979 |
| | | JP S5184304 A | 23 July 1976 |

Form PCT/ISA/210 (patent family annex) (July 2009)